# EUROPEAN PATENT APPLICATION

(11) **EP 1 352 676 A1**
(43) Date of publication of application: **15.10.2003**
(21) Application number: 01963463.3
(22) Date of filing: 06.09.2001
(51) Int. Cl.: A63F 13/00, A63F 13/12

(54) **METHOD FOR PROVIDING FORTUNE INFORMATION**

(30) Priority: 22.12.2000 JP 2000390618
(71) Applicant: KITAGAWA, Masahiko, Setagaya-ku, Tokyo 157-0065 (JP)
(72) Inventor: KITAGAWA, Masahiko, Setagaya-ku, Tokyo 157-0065 (JP)
(74) Representative: Hemmer, Arnd (DE)
(86) International application number: PCT/JP01/07726
(87) International publication number: WO 02/051513

(57) **Abstract**

This invention provides methods of supplying information for fortunetelling wherein a user can receive useful information by accessing a fortunetelling site. A server (S) delivers the fortune information to a client (C) based on the presetting of the delivery at a fixed time everyday, the delivery at every hour, the delivery when the user's biorhythm is low, and the delivery when the fortune result is ill or good. When the delivery time is decided a computer (W) calculates the fortune result out and the server delivers the result. When the delivery time is not decided the computer is preset to perform a fortunetelling and to calculate the fortune result where the computer judges good or ill result of the fortunetelling and thus the server (S) delivers the fortune result in compliance with the judgement of the computer (W) (Fig. 2).

## Description

This invention relates to a method of supplying an information for fortunetelling through a use of an internet, LAN, WAN, mobile communication system or others.

### BACKGROUND OF THE INVENTION

In the present stage where an internet communication is quite popular among people, many internet services have their sites for "Fortune-telling" contents, through which it is easy for internet communicators to approach the fortunetelling site to watch their own fortunes. An user who wants to check his fortune may access the site and input his own data such as his names, his date of birth according to a format indicated on a browser, and thus the computer site performs its fortunetelling in accordance with the obtained data, and then it displays the fortune result on the browser after proper calculation, wherein the user can obtain the relative result.

Nowadays, however, these fortunetelling sites are flooded, which result the similar distributions of fortunetelling data without any significant difference. Therefore, for these sites, it is necessary to furnish with some extra and special data supplements to obtain many visitors on the site.

Recently, even a terminal of mobile communication machines such as PHS or a handy phone can enjoy the internet services, and there are many fortunetelling sites on these services. However, the contact to the site by the terminal needs the operation of a user's thumb only, which is very troublesome and difficult, and therefore on this site services, only limited information for the fortunetelling can be supplied.

### SUMMARY OF THE INVENTION

The present invention has an object to resolve problems as discussed above, and it provides a method of supplying information for fortunetelling in more useful manners to all users of the relative sites. In other words, this method of supplying information for fortunetelling provides a server, equipped with a database containing all data for users, another database containing fundamental data for fortunetelling, and a computer which calculates and outputs fortune results after reading out all obtained data in relation to principles of the fortunetelling. The computer offers the fortune result at a fixed time as required, the result is then distributed to the user via the server. Once the user visits the site and inputs his own data and registers the same on the site, the last information for his fortune are regularly and automatically supplied.

As the user's data, in case of astrology, his date of birth, his time of birth and his place of birth are adopted, while as the fundamental data, in case of astrology, revolving data of solar stars such as planets and satellites and their meaningful messages, revolving data of constellations such zodiac and their meaningful messages, and meaningful messages of the zodiac are adopted. These data are assembled to make a horoscope, whereon the message for the user is produced and thus the result for fortunetelling is supplied for each user.

The fixed time to supply the result can be decided both by the site side and the user side. For example, once a day at 8:00 AM or every other time in a day can be decided. The supplying time can be decided by the site side, but it is preferable this supplying time is decided by the user. In case if the user wants to know the relative result as prompt as possible, then the fixed time can be set at every 1 hour or every 30 minutes. At the same time, a programming by the computer judging whether the fortune result is of good luck or ill luck can be also prepared, and in this case, the fortune result is immediately delivered to the user, from which he can recognize the result for his own judgement. In order to recognize whether the result is good or ill, the computer can judge itself by offering its message showing a positive or negative sentence or languages or flags.

In this method of the present invention, the user can adopt a terminal connected to the network such as a telephone, personal computer, PDA, TV, personal computer used in a company, a lease terminal prepared at some convenience store and so on, while as a matter of course he can adopt his terminal of the mobile communication system. When the user contacts by his terminal of mobile communication which is devised to show his present position, this user can offer his present position to the server, whereon this position datum can be added to the data of the server. In recent days, the mobile terminal equipped with GPS (Global Positioning System) is popular, and therefore the user position data can be also supplied to the server as the position datum for obtaining more detailed information.

For instance, in astrology, connections between the user's position and the revolving situations of his zodiac become very important, and therefore the user's position at present can be an important factor to supply accurate fortune information. Further, when the user changes his position gradually, the changes of his fortunetelling can be also supplied accordingly from time to time. In other words, the different results of fortunetelling can be supplied to the user when he changes his position far from a fixed position, and this changing result information benefits the user. In case if his changing position becomes ill, then he can decide himself how to deal with his future action. The fixed position can be decided in view of a hand-off of a station for the mobile communication or in view of the user's moving position for GPS machine.

In the sites as above explained, some special data by some popular fortune tellers are adopted, and then when the result for fortunes is output, the above special data can be considered as included, so that the user can enjoy the results with some different information thereof. For instance, in case of the astrology, when the data obtained by assembling the constellations, planets and zodiac houses becomes into a boundary of the other data, the total data should be considered by the fortune teller by his experience and his practical intuition. On the other side, degrees of star meanings and planet meanings can be also judged by different manners. The features of the fortune teller are recorded as data memory, so that a flow of fortune calculation is adjusted. For example, the adjustment is made for respectively, when an angle of the star becomes some degree with reference to another star, the zodiac should be adopted in former house, while the aspect enters into another degree the zodiac should be adopted in different house.

The message of the fortunetelling can be supplied in sound. In this case, the sound recorded in the server is supplied in normal telephone communication. Or else, the sound data as the sound file is supplied from the server, and the data can be changed in the sound by the client in proper manners. The sound can be set to some special talent in his special speaking tone, and thus the user can enjoy this sound information by the voice of the talent.

On the user's approval, based on the output data for fortunes, the computer picks up another user who is congenial to the original user and introduces him (or her) as a good partner for the future association. Thus, the partner can be selected according the fortunes in the time or the day, and thus the information of this partner such as a telephone number or an e-mail address is obtainable accordingly.

### BRIEF DESCRIPTIONS OF THE DRAWINGS

FIG.1 is a schematic illustration of embodying for a method of supplying informartion for fortunetellings developed by this invention.
FIG.2 is a flow chart of supplying information for fortunetellings at a fixed time.
FIG.3 is a flow chart of supplying information for ill fortunes.
FIG.4 is a flow chart of supplying information for ill fortunes when a user moves toward ill directions.
FIG.5 is a flow chart showing an information for a congeniality checkup.

### DETAILED DESCRIPTIONS OF PREFERRED EMBODIMENT

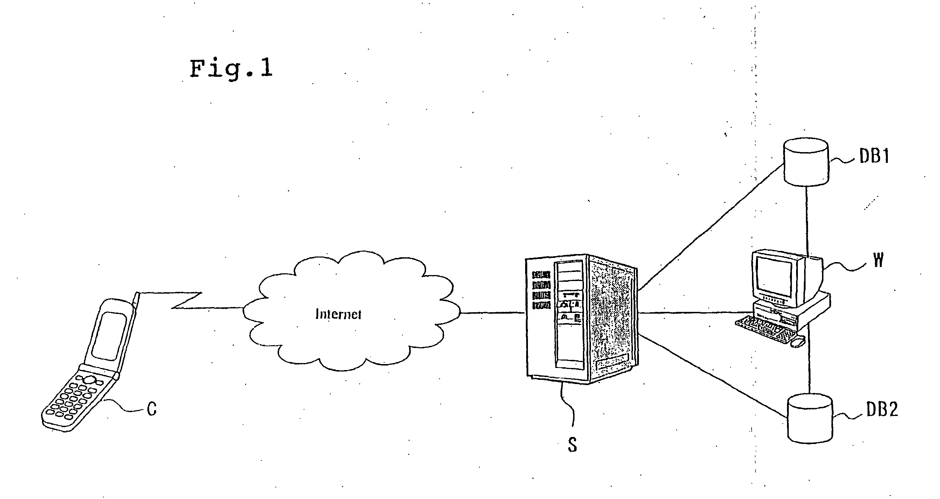

With reference to FIG.1, one example of an embodiment is now explained. A handy phone which can be connected with an internet is now adopted as a client for the example.

A server (S) connected to the internet is equipped with a user's database (DB1) containing user data, a fortunetelling database (DB2) containing fundamental data for fortunetelling, and a computer (W) in which the result of fortunetelling is calculated after the data of DB1 and DB2 are read. In this constitution, the computer (W) and the server (S) may be of one same composition. The computer (W) calculates the fortune result of astrology by operation of horoscope method. As the fundamental data, revolving data of solar stars, namely from Sun to Pluto including moon but excluding Earth, and messages of each star (for instance, Sun has the meanings of "Ego", "Light", "Paternity" and so on while Moon has the meanings of "Feelings", "Moods", "Intuitions" and so on.), as well as the revolving data of 12 zodiac and their messages (for instance, Aries has "Egotistic", "Mild and Patient" and so on while Cancer has "Maternity", "Affection", "Peace of Mind" and so on) are adopted. Further, the meanings of the aspects produced by these stars and the zodiac (for example, 60°means "Good Fortune for harmony" while 90°means "III Fortune for appearing") as well as the meanings of 12 houses produced by dividing equally based on east around 360°circle (for instance, House 1 means "Self Personality" and so on while House 2 means "One's Desire", "Belief" and so on) are adopted. These fundamental data are all contained in DB2.

As the user data stored in DB1, the user accesses a fortunetelling site established in the server (S) and registers it, then the data are inputted by a key operation of a client (C). In this invention, the astrology is adopted, the data registered by the user are, his name, age, date of birth (hour and minute), birth of place, telephone number, and mail-address. When these data are registered, the fundamental data are read out from the database (DB2) based on these obtained data, and then the computer (W) operates its calculation to supply the fortunetelling result based on principles of the horoscope.

If the user wants to have his fortune for the date of the birth by the horoscope, first 12 houses are set in equal spaces from the center of the earth toward the east. Then, secondly, the positions of the solar stars are decided in view of the time of the birth, the year, month, date, hour and minute, wherein what stars come in any house is decided. Further, it is decided what constellation of the zodiac which is forming a line around the equator stands against the east, and also it is decided what constellations stay in any house. By this decision, it is now cleared what stars or constellations with their own meanings come in any house with their house meanings, and thus the fortunetelling is supplied based on these collections of the data. By this method, there are 12 houses, 10 stars and 12 constellations, then total 1440 messages, by calculation of 12X10X12, can be obtainable. In addition, the messages produced by the aspects of the stars and constellations can be also obtained. At the same time, according to each mutual position between the stars and constellations, the degree of the importance is differentiated for the meanings. Therefore, tremendous numbers of the messages can be produced thereof. The degree of the importance can be judged in different manners in accordance with schools of the astrology or experiences of the fortune tellers. All data including these features are stored in the database (DB2), so that the considerable number of the fortune result can be supplied in good manners.

The fortune result based on these fundamental data can be obtained from the assembly of the messages through the connections between users' constellations, houses and the positions or aspects of stars.

In this embodiment, when the user is registered, methods of supplying the fortune results can be selected at option. The time can be set to a fixed time such as 8 O'clock in the morning, at noon and at 3 O'clock in the afternoon, or else at every hour, or at the time of low biorhythm, or at the time of good or ill fortunes. According to the setting time as registered the server (S) delivers the fortune results to the client (C) . In case if the supply time is decided, in other words at the fixed time, the computer (W) performs its calculation at that interval and delivers the obtained result to the server (S). On the other hand, when the setting time is not regular, namely at the time of low biorhythm or at the time of ill fortune, the computer (W) is preset to perform its fortune supply at every 15 minutes, 30 minutes, or every hour optionally, and the computer (W) judges waves of the biorhythm or bad sentence of the messages included in the ill fortunetelling, and thus the server (S) supplies the fortune result accordingly.

In this embodiment, the client (C) uses a handy phone and registers its position in accordance with the mobile communication system. The position registration data is transferred via a station exchanger to the server (S) as the user's data, and thus the actual position of the client (C), namely the user, can be obtained. This data is of course added to the original data, so that the correct fortunetelling can be supplied at a real time base. In other words, if latitude or longitude changes, the location of the stars and the houses against the constellations changes accordingly. Therefore, if the setting of the fortunetelling is preset to change the data in connection with such change, then more accurate information can be supplied therefore. Moreover, on obtainment of the location change data, this method can recognize the movement of the user, and therefore if the user is coming into ill direction the server can offer the ill information to the user. Thus, the correct and advantageous information can be supplied in good manners to the user.

When the client (C) has a GPS receiver, the present location can be supplied by its faculty, and the client (C) offers its position data to the server (S) accordingly and the data can be referred by the computer (W). Accordingly, the similar information as above can be supplied to the user.

The fortune result including the change of the fortunetelling is transferred to the client (C) from the server (S), and the server (S) makes a call sign to the client (C), and on response of the client (C), the server (S) offers the relative information by a text or by display data, and then the information are displayed on the monitor of the client (C). By this connection, the user can receive automatically the information.

The delivery of the fortunetelling can be made by the text or by the display data, and also this delivery can be made by sound. Or else, the delivery can be made by the system of movie file method. For instance, the server (S) makes the call sign on the client (C), and it supplies the fortunetelling by artificial sound produced by the computer (W) or the server (S). In this case, the voice of some popular fortune teller or special talent is recorded into a voice memory or into the data base (DB2), so that the client (C) can listen to the fortune result by the real voices of them. On the other hand, if the client (C) has a sound file recording faculty, the client (C) can receive and hear as if the fortune teller or the talent is speaking to the client (C) about the result of the fortunetelling. The speaker can be selected by the user through the client (C), or else it can be preset by the server (C) side accordingly.

When the fortune result is calculated out by the computer (W), the information showing another user who is congenial as a partner to the original user based on the data of the date of the birth or the similar, and then such user's data may be referred through the database (DB1). If this obtained user registers his name with his(her) approval, the relative data is delivered to the client (C). By this data delivery, the original user has a chance to meet the registered user as the congenial partner.

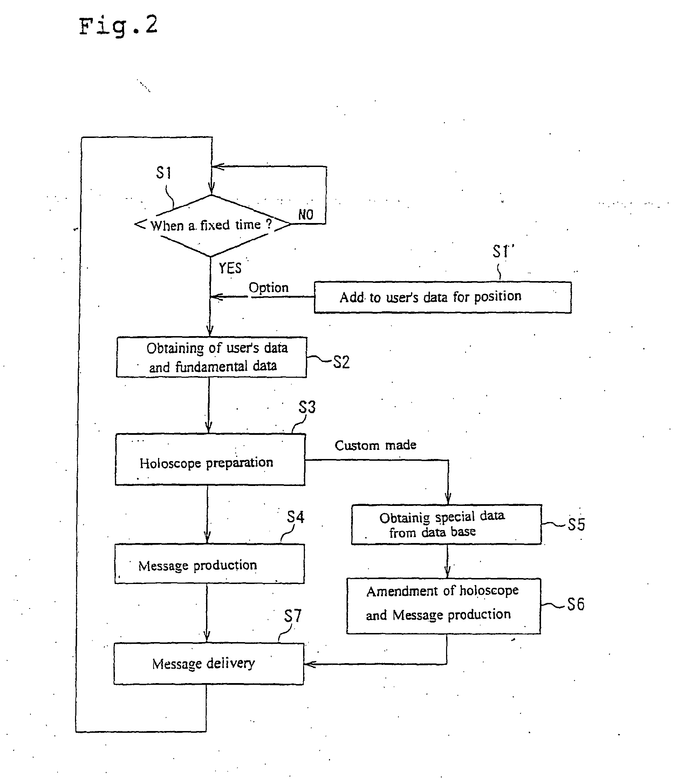

With reference to Figs. 2 to 5, the method of supplying information for fortunetellings is now explained.

Referring to FIG.2, this flow chart shows how to deliver the fortunetelling information at the fixed times through the computer (W).

The computer (W) judges the fixed time at a STEP 1 (S1) by a inner timer. When the fixed time comes, it gains on a STEP 2 (S2) and reads out the user's data from the database (DB1) and the fundamental data from the database (DB) respectively. At this moment, according to an optional setting of STEP S'1 (S1'), it can obtain the position data of the client (C) and add the same data into the the user's data. Once the required data are obtained, At STEP 3 (S3) the computer (W) produces the holes cope based on the obtained data by the revolving conditions of the stars and the constellations. In the standard method, the computer (W) gains on STEP 4 (S4) and it collects and combines each message contained in the data base (DB2) as the fundamental data, so that it produces the message for the fortunetelling. On the other side, in a custom-made method, the computer (W) gains on STEP 5 (S5) wherein it reads out the special data of the fortune teller from the fundamental data (DB2) and, at STEP 6 (S6) the horoscope is corrected with this obtained data as a variable and it produces the message for the fortunetelling. After the fortune result is calculated out, at STEP 7 (S7), the completed message is delivered to the client (C) with a text display or sound display. After the delivery is finished, the computer (W) returns to STEP 1 (S1) and waits the next fixed time.

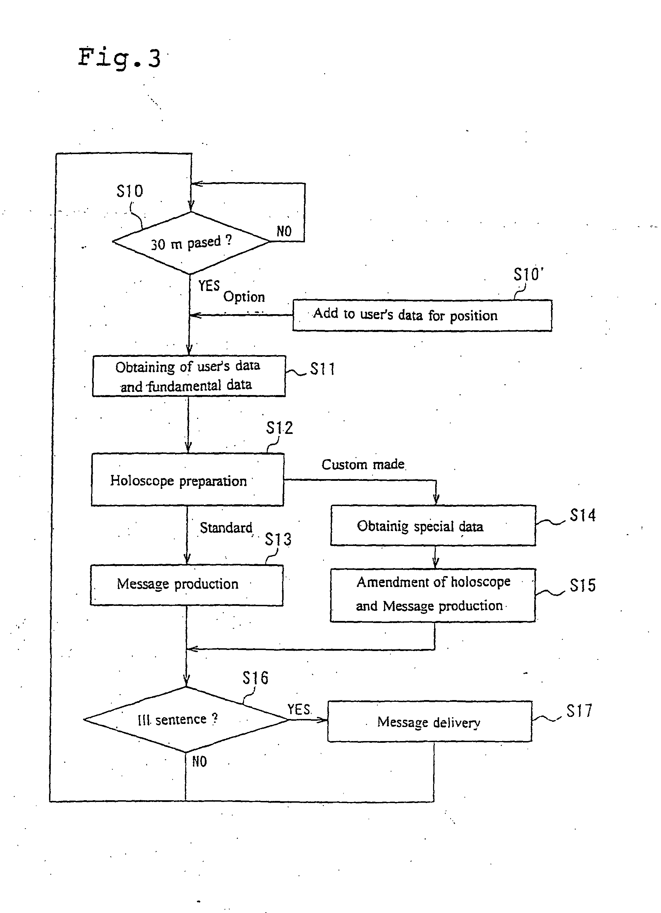

With reference to FIG.3, this flow chart shows how to deliver promptly the ill fortune information after the judgement of the computer (W) for the obtained fortunetelling.

The computer (W) judges whether the fixed time for 30 minutes has passed or not at STEP 10 (S10). When it confirms the 30 minutes lapse, it gains on STEP 11 (S11)and the similar treatment like the FIG.1 in STEP 2 (S2) □ STEP 6 (S6) is performed in STEP 11 (S10) □ STEP 15 (S15). Thus, when the message for the fortunetelling is produced, the computer (W) gains on STEP 16 (S16), wherein it judges whether the ill fortunetelling is included in the message or not. An address or index in advance is tabled in the database (DB2) into which III messages are included, and the computer (W) is arranged to recognize the message as ill fortune on receipt of such data. When the judgement by STEP 16 (S16) shows "NO", the computer (W) returns to STEP 10 (S10) to wait another 30 minutes, while when this judgement shows "YES", it gains on STEP 17 (S17). At this STEP 17 (S17), the message of the fortune result is delivered to the client (C) and it returns to at STEP 10 (S10) to wait another fixed time.

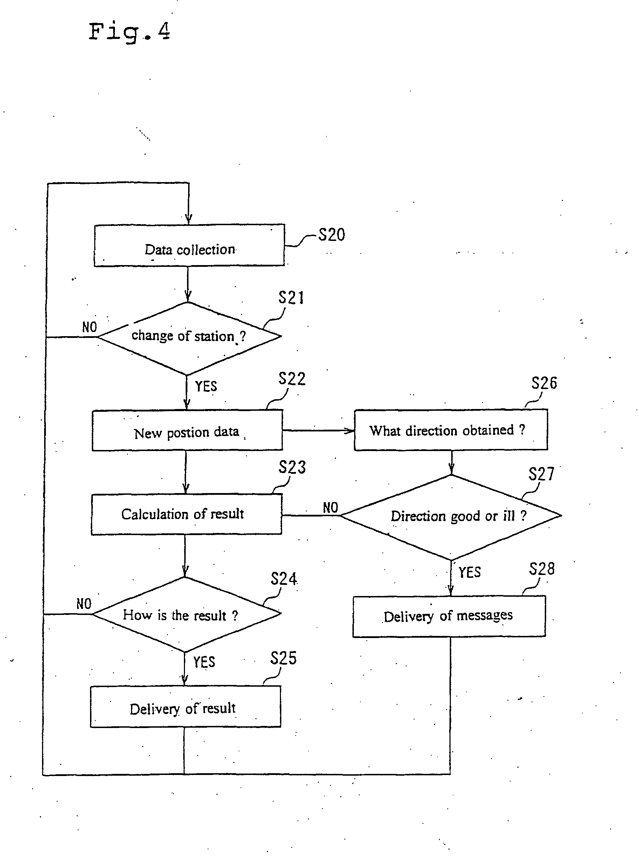

In reference with FIG.4, this flow chart shows how to deliver the fortune result based on the change of user's position.

The server (C) collects the position data of the client (C) where the position is controlled by the exchange station of the mobile communication at STEP 20 (S20). At STEP 21 (S21), the change of the station is checked. When the station is not changed, the computer (W) returns to STEP 20 (S20) to collect the position data. On the other hand, when the station is changed, the computer (W) records its, change into the database (DB1) and adds the change into the user's data. Then, the computer (W), at STEP 23 (S23), calculates out the fortune result after it proceeds the same treatment as explained in FIG.2 in STEP S1' (S1') □STEP S6 (S6). The obtained result can be delivered as it is, but in this embodiment, the computer (W) gains on STEP 24 (S24) and it judges whether the obtained result becomes worse than the previous result. This judgement, for instance, depends upon whether ill messages of the present fortunes are more in the number than those of the previous fortunes. In case if the ill messages are smaller in the number, the message data are only recorded in the database (DB1) and the computer (W) returns again to STEP 20 (S20). In case if the ill messages are bigger, they are delivered to the client (C) from the server (S) at STEP 25 (S25), and it returns to STEP 20 (S20) accordingly.

In this embodiment, the user can be also informed of a warning wherein he is coming toward ill directions. At STEP 22 (S22) where a new position data is obtained, the computer (W) compares the new data with the previous data at STEP 26 (S26) and detects the direction of the new position data. Then, at STEP 27 (S27). the computer (W) reads out the ill directions from the previous position data and judges whether the new position is of good or ill directions. When the obtained data show of good direction, the computer returns at STEP 23 (S23) to calculate the fortune result. When the obtained data show of bad direction, the computer (W) gains on STEP 28 (S28) and delivers its message to the client (C) that he is now coming toward ill direction. After this delivery, the computer (W) returns to STEP 20 (S20).

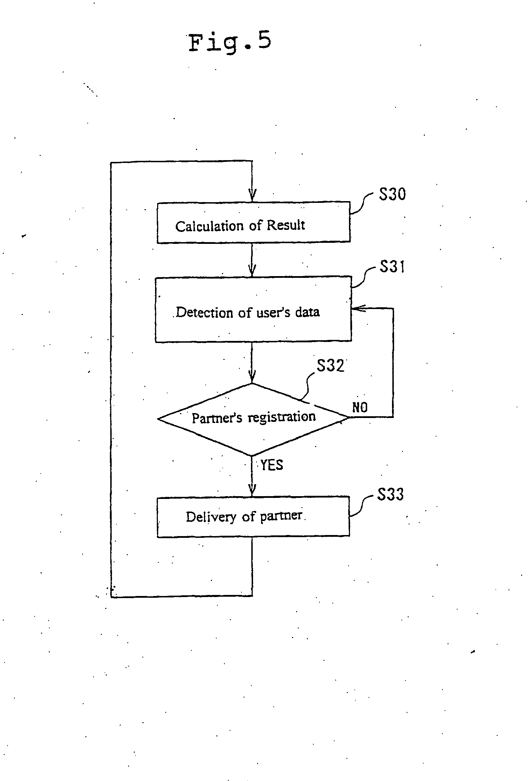

With reference to FIG.5, the flow chart shows a congeniality checkup.

At STEP 30 (S30), after the fortune result is obtained in the procedures from FIG.2 to FIG.4, at STEP 31 (S31), the computer (W) checks a good partner by the date of birth and the living place and detects the partner from the user's data included into the database (DB1). When the checking informs for instance a female born on December 25, 1970 and living in Hamatsu City of Japan as a best partner to the user, then the computer (W) detects such a female person among the database (DB1). When the proper datum is found among the database (DB1) and is also checked at STEP 32 (S32) whether this charged female has registered herself as she may be disclosed for correspondence (YES), then the relative data for the female can be delivered to the client (C) at STEP 33 (S33). Accordingly, the user can contact directly with this best partner by his operation of the client (C). When the registration shows she is abstained from be contacted (NO), then the computer continues to detect other proper females recorded in the database (DB1).

According to the present invention, the user side needs not access to the site of the fortunetelling, the fortune result is delivered to the user actively by the side of the fortune teller. This is quite different from the prior systems for the delivery of the fortunetelling. As the user side, he can receive the fortune result at the fixed time every day or at the periodical time as required. At the same time, he can receive all information in advance whenever his fortune changes and he changes his position. In other way, the latest fortune or changing fortune is constantly and automatically delivered to the user, which is quite useful. The user can receive his fortune information in advance when he wants to go or act in better directions. With regard to the congeneniality checking up, the fortune results are produced based on the horoscope table including his moving direction. When a meeting party for young men and women with a view to their marriages is held, the user may obtain the necessary information in advance by the issuance of the fortunetelling result, so that he may be in his mind for the best partner by the supplied information before he attend at the party. The user may guide himself to go in a good way by the submissions of the information by the fortunetelling.

## Claims

1. A method of supplying information for fortunetelling, comprising:
a server (S) equipped with a database (DB1) containing a user's data;
the server equipped with another database (DB2) containing fundamental data of fortunetelling;
the server (S) equipped with a computer (W) calculating out results of the fortunetelling for the user, by the fundamental data being read out based on the user's data in accordance with particular principles of the fortunetelling; and
wherein the results are delivered to the server through which the user obtain the results by his operation of a client (C).

2. The method according to claim 1, wherein a user sets a fixed time of a delivery with a server (S) through a client (C).

3. The method according to claim 1, wherein results of the fortunetelling are delivered at an fixed interval.

4. The method according to claim 1, wherein a server delivers results of fortunetelling whenever a computer (W) calculates out the results.

5. The method according to claim 1, further comprising a database (DB1) equipped with special data supplied by a special fortune teller, wherein principles of fortunetelling are changed in compliance with the special data.

6. The method according to claim 1, wherein results of fortunetelling are delivered by sound to a client (C) via a server (S).

7. The method according to claim 6, wherein results of fortunetelling are performed by a voice of some special character.

8. The method according to claim 1, wherein results of fortunetelling are delivered to a server (S) by sound data and the sound data are regenerated by a client (C).

9. The method according to claim 8, wherein regeneration of sound data is performed by some special character.

10. The method according to claim 1, wherein based on results of fortunetelling a computer (W) detects data of another user who is congenial to the original user and the detected data showing its correspondence data is delivered to a client (C).

11. A method of supplying information for fortunetelling, comprising :
a server (S) equipped with a database (DB1) containing a user's data;
the server equipped with another (DB2) database containing fundamental data of fortunetelling;
the server (S) equipped with a computer (W) calculating out results of the fortunetelling for the user, by the fundamental data being read out based on the user's data in accordance with particular principles of the fortunetelling; and
wherein the computer (W) judges whether the results are of good or ill and the judged results are delivered to the server (S) through which the user obtain the results by his operation of a client (C).

12. The method according to claim 11, further comprising a database (DB1) equipped with special data supplied by a special fortune teller, wherein principles of fortunetelling are changed in compliance with the special data.

13. The method according to claim 11, wherein results of fortunetelling are delivered by sound to a client (C) via a server (S).

14. The method according to claim 13, wherein results of fortunetelling are performed by a voice of some special character.

15. The method according to claim 11, wherein results of fortunetelling are delivered to a server (S) by sound data and the sound data are regenerated by a client (C).

16. The method according to claim 15, wherein regeneration of sound data is performed by some special character.

17. The method according to claim 11, wherein based on results of fortunetelling a computer (W) detects data of another user who is congenial to the original user and the detected data showing its correspondence data is delivered to a client (C).

18. A method of supplying information for fortunetelling, comprising :
a server (S) equipped with a (DB1) database containing a user's data;
the server equipped with another database (DB2) containing fundamental data of fortunetelling;
the server equipped with a computer (W) calculating out results of the fortunetelling for the user, by the fundamental data being read out based on the user's data in accordance with particular principles of the fortunetelling;
a terminal of a mobile communication system used as a client (C);
present data for the user's position by utilizing position registering faculty being transferred to the server (S) from the mobile communication system and the data to be added to the user's data;
and wherein the computer (W) calculates out the results of the fortunetelling which are delivered to a client (C) via the server (S).

19. The method according to claim 18, wherein a computer calculates out results of fortunetelling when a position of a user is changed far from fixed position.

20. The method according to claim 19, wherein the calculated results of the fortunetelling is transferred to a server (S) timely.

21. The method according to claim 19, wherein a computer judges whether the calculated results of the fortunetelling are of good or ill and the obtained results are delivered to a server (S).

22. The method according to claim 19, wherein a computer (W) detects a direction compared with former position of a user whether the position is changed far from fixed position, and when this direction is judged of good or ill, relative messages are supplied thereof from a server (S).

23. The method according to claim 18, further comprising a database (DB1) equipped with special data supplied by a special fortune teller, wherein principles of fortunetelling are changed in compliance with the obtained special data.

24. The method according to claim 18, wherein results of fortunetelling are delivered by sound to a client (C) via a server (S).

25. The method according to claim 24, wherein results of fortunetelling are performed by a voice of some special character.

26. The method according to claim 18, wherein results of fortunetelling are delivered to a server (S) by sound data and the sound data are regenerated by a client (C).

27. The method according to claim 26, wherein regeneration of sound data is performed by some special character.

28. The method according to claim 18, wherein based on results of fortunetelling a computer (W) detects data of another user who is congenial to the original user and the detected data showing its correspondence data is delivered to a client (C).

29. A method of supplying information for fortunetelling, comprising :
a server (S) equipped with a database (DB1) containing a user's data;
the server equipped with another database (DB2) containing fundamental data of fortunetelling;
the server (S) equipped with a computer calculating out results of the fortunetelling for the user, by the fundamental data being read out based on the user's data in accordance with particular principles of the fortunetelling;
a GPS receiver used as a client (C) of the user;
present data for the user's position by utilizing GPS faculty being transferred to the server (S) from the GPS receiver and the data to be added to the user's data; and
wherein the computer calculates out the results of the fortunetelling which are delivered to a client (C) via the server (S).

30. The method according to claim 29, wherein a computer calculates out results of fortunetelling when a position of a user is changed far from fixed position.

31. The method according to claim 30, wherein the calculated results of the fortunetelling is transferred to a server (S) timely.

32. The method according to claim 30, wherein a computer (W) judges whether the calculated results of the fortunetelling are of good or ill and the obtained results are delivered to a server (S).

33. The method according to claim 30, wherein a computer (W) detects a direction compared with former position of a user whether the position is changed far from fixed position, and when this direction is judged of good or ill, relative messages are supplied thereof from a server (S).

34. The method according to claim 29, further comprising a database equipped with special data supplied by a special fortune teller, wherein principles of fortunetelling are changed in compliance with the obtained special data.

35. The method according to claim 29, wherein results of fortunetelling are delivered by sound to a client (C) via a server (S).

36. The method according to claim 35, wherein results of fortunetelling are performed by a voice of some special character.

37. The method according to claim 29, wherein results of fortunetelling are delivered to a server (S) by sound data and the sound data are regenerated by a client (C).

38. The method according to claim 37, wherein regeneration of sound data is performed by some special character.

39. The method according to claim 29, wherein based on results of fortunetelling a computer (W) detects data of another user who is congenial to the original user and the detected data showing its correspodence data is delivered to a client (C).
